# EUROPÄISCHE PATENTSCHRIFT

(11) **EP 1 000 955 B1**
(45) Veröffentlichungstag und Bekanntmachung des Hinweises auf die Patenterteilung: **27.04.2005**
(21) Anmeldenummer: 99121812.4
(22) Anmeldetag: 04.11.1999
(51) Int. Cl.: C08G 18/32, C08J 9/08

(54) **Carbamatlösungen**
Carbamate solutions
Solutions de carbamate

(30) Priorität: 16.11.1998 DE 19852681
(43) Veröffentlichungstag der Anmeldung: 17.05.2000
(73) Patentinhaber: BASF AKTIENGESELLSCHAFT, 67056 Ludwigshafen (DE)
(72) Erfinder: Woo, Peter, Dr., 49356 Diepholz (DE); Klanke, Anke, 49453 Wetschen (DE); Stadler, Edmund, Dr., 96142 Hollfeld (DE); Tintelnot, Dieter, 49356 Diepholz (DE); Hadick, Udo, 49661 Cloppenburg (DE); Hinrichs, Ralf, 27248 Ehrenburg (DE); Hürkamp, Horst, 49413 Dinklage (DE); Sobolewski, Klaus, 49356 Diepholz (DE); Jahncke, Manfred, 49152 Bad Essen (DE)

(56) Entgegenhaltungen:
- EP-A- 0 236 895
- EP-A- 0 415 599
- EP-A- 0 854 159
- WO-A-98/04606

## Beschreibung

Die Erfindung betrifft Carbamatlösungen erhältlich durch Umsetzung mindestens eines Alkanolamins mit Kohlendioxid in mindestens einer organischen Verbindung als Lösungsmittel, das ein Molekulargewicht von 60 bis 600 besitzt und mindestens eine Hydroxylgruppe enthält, wobei das Carbamat mindestens 0,51 mole, bevorzugt 0,61 bis 2,5 mole gebundenes Kohlendioxid pro mol Alkanolamin enthält und das Alkanolamin eine der folgenden Formeln aufweist:

(I) : NH₂-X-OH (I)

(II): HO-X-Y-OH (II)

(III): HO-X-NR⁹-(CR⁷R⁸)ₙ₅-Y-OH (III)

mit

X : - [(CR¹R²)ₙ₁-NR³]ₙ₂-[(CR⁴R⁵)ₙ₃-NR⁶]ₙ₄(CR⁷R⁸)ₙ₅-

Y: -[NR⁶-(CR⁴R⁵)ₙ₃]ₙ₄-[NR³-(CR¹R²)ₙ₁]ₙ₂-

und
n1, n3, n5: gleiche oder verschiedene, ganze Zahlen ausgewählt aus der Gruppe 1, 2, 3, 4,
n2, n4: gleiche oder verschiedene, ganze Zahlen ausgewählt aus der Gruppe 0, 1, 2, 3, 4, 5, 6, bevorzugt 0 und/oder 1, wobei jeweils für X und Y die Summe aus n2 und n4 größer/gleich 1 ist,
R1, R2, R4, R5, R7, R8: gleiche oder verschiedene Reste ausgewählt aus der Gruppe Wasserstoff, aliphatische, cycloaliphatische, araliphatische und aromatische Reste mit 1 bis 20 Kohlenstoffatomen, bevorzugt aus der Gruppe: Wasserstoff, Methyl, Ethyl, Propyl, iso-Propyl, Butyl,
R3, R6, R9: gleiche oder verschiedene Reste ausgewählt aus der Gruppe Wasserstoff, aliphatische, cycloaliphatische, araliphatische und aromatische Reste mit 1 bis 20 Kohlenstoffatomen, bevorzugt aus der Gruppe Wasserstoff, Methyl, Ethyl, Propyl, iso-Propyl, Butyl, wobei bevorzugt in (I), (II) und (III), besonders bevorzugt in (II) und (III) mindestens einer der Reste R³, R⁶, R⁹ Wasserstoff darstellt.

Des weiteren bezieht sich die Erfindung auf Verfahren zur Herstellung von Schaumstoffen auf der Basis von Polyisocyanat-Polyadditionsprodukte sowie derart erhältliche Polyisocyanat-Polyadditionsprodukte.

Geschäumte Polyisocyanat-Polyadditionsprodukte, die üblicherweise Polyurethan- und gegebenenfalls Polyisocyanuratstrukturen aufweisen, sind allgemein bekannt. Als Treibmittel zur Herstellung dieser Schaumstoffe wird vielfach Wasser eingesetzt, das mit den Isocyanatgruppen unter Bildung von Kohlendioxid, dem eigentlichen Treibmittel, reagiert. Zur Bereitstellung von Kohlendioxid als Treibmittel bei der Herstellung der Schaumstoffe sind des weiteren aus WO 98/04606, EP-A 652 250, EP-A 121 850 und EP-A 236 895 Carbamate, üblicherweise Addukte von Kohlendioxid an Alkanolamine, bekannt. Diese Carbamate weisen gegenüber Wasser als Treibmittel den wesentlichen Vorteil auf, daß die Bildung von Harnstoffstrukturen in den Schaumstoffen aufgrund der Reaktion des Wassers mit den Isocyanatgruppen vermieden wird. Die Carbamate setzen als Kohlendioxid-Amin-Addukte während der Polyisocyanat-Polyadditionsreaktion das chemisch gebundene Kohlendioxid frei. Nachteilig an den bekannten Carbamaten wirkt sich deren geringer Gehalt an Kohlendioxid, bezogen auf die Amine aus. Die in WO 98/04606 und EP-A 652 250 beschriebenen Alkanolamine binden nicht mehr als 0,5 mole Kohlendioxid pro mol Alkanolamin, da zur Bindung von einem mol Kohlendioxid zwei mole Aminogruppen benötigt werden. Ein weiterer wesentlicher Nachteil insbesondere der Lehre gemäß EP-A 121 850 stellt die bevorzugte Herstellung der Carbamate in wässrigem Medium dar, da das Wasser mit den Isocyanaten während der Herstellung der geschäumten Polyisocyanat-Polyadditionsreaktion reagiert. Selbst wenn Wasser gegebenenfalls als zusätzliches Treibmittel eingesetzt wird, ist spezifische Dosierung in Mischung mit dem Carbamat schwer zu erreichen. Zudem weisen insbesondere Carbamate, die ohne Lösungsmittel hergestellt wurden, eine unerwünscht hohe Viskosität auf, die ihren Einsatz bei der Herstellung von Schaumstoffen erschwert.

Da die Amine aufgrund ihrer katalytischen Aktivität die Polyadditionsreaktion beeinflussen können, ist die Menge an einzusetzendem Carbamat begrenzt. Schaumstoffe insbesondere mit einer geringen Dichte und damit einer hohen Volumenausbeute aus dem Gewicht der eingesetzten Reaktionsmischung sind damit nur begrenzt zugänglich.

Der vorliegenden Erfindung lag daher die Aufgabe zugrunde, Carbamate erhältlich durch Umsetzung mindestens eines Alkanolamins mit Kohlendioxid zu entwickeln, die pro mol Alkanolamin möglichst viele mole Kohlendioxid gebunden enthalten. Des weiteren sollten die Carbamate eine gewünscht niedrige Viskosität aufweisen, um sie einfacher in der Polyisocyanat-Polyadditionsreaktion einsetzen zu können. Außerdem sollte ein Verfahren zur Herstellung von Schaumstoffen auf der Basis von Polyisocyanat-Polyadditionsprodukten, bevorzugt Weichschaumstoffen, insbesondere weichen oder halbharten Integralschaumstoffen auf der Basis von Polyisocyanat-Polyadditionsprodukten, beispielsweise durch Umsetzung von (a) Isocyanaten mit (b) gegenüber Isocyanaten reaktiven Verbindungen in Gegenwart von (c) Treibmitteln und gegebenenfalls (d) Katalysatoren und/oder (e) Hilfs- und/oder Zusatzstoffen, entwickelt werden. Durch ein derartiges Verfahren sollte die Volumenausbeute von Carbamat-geschäumten Schaumstoffen und die Wirtschaftlichkeit, beispielsweise durch Einsparung von Treibmitteln oder Katalysatoren, verbessert und Schaumstoffe geringerer Dichte zugänglich gemacht werden. Des weiteren sollten die mechanischen Eigenschaften der Polyisocyanat-Polyadditionsprodukte, insbesondere von weichen oder halbharten Integralschaumstoffen, z.B. das Abriebverhalten, die Zugfestigkeit und die visuelle Erscheinung der Außenhaut verbessert werden.

Diese Aufgabe wurde erfindungsgemäß durch die eingangs definierten Carbamate in den erfindungsgemäßen Lösungen der Carbamate in den Lösungsmitteln und deren Einsatz als Treibmittel in Verfahren zur Herstellung von Schaumstoffen auf der Basis von Polyisocyanat-Polyadditionsprodukten gelöst.

Die erfindungsgemäßen Carbamate weisen den besonderen Vorteil auf, daß sie auf Alkanolaminen basieren, die mehr als 0,5 mole Kohlendioxid pro mol Alkanolamin binden können. Dies beruht auf der besonderen Struktur der eingesetzten Alkanolamine. Zudem konnte die Viskosität der Lösungen den Anforderungen bei der Schaumstoffherstellung gerecht angepaßt werden. Keine der zitierten Schriften offenbart diese erfinderische Lösung oder legt sie nahe. Gerade EP-A 121 850 beschreibt, daß die Herstellung der Carbamate bevorzugt ohne organische Lösungsmittel durchgeführt wird. Die in der Offenlegungsschrift angegebenen hochmolekularen Polyole als mögliche, aber nicht bevorzugte Lösungsmittel weisen gerade den Nachteil auf, das eine Lösung des Carbamates in diesen Verbindungen eine unerwünscht hohe Viskosität aufweist.

Besonders bevorzugt sind Carbamat-Lösungen auf der Basis von NH₂-CH₂-CH₂-NH-CH₂-CH₂-OH, im folgenden als 2-(2-Aminoethylamino)-ethanol bezeichnet, H₂N-(CH₂)₂-NH-(CH₂)₃-OH (3-[(2-Aminoethyl)amino]-propanol), H₂N-(CH₂)₃-NH-(CH₂)₂-OH (2-[(3-Aminopropyl)amino]-ethanol), CH₃-CHOH-CH₂-NH-(CH₂)₂-NH₂ (1-[(2-Aminethyl)amino]-2-propanol, HO-(CH₂)₂-NCH₃-(CH₂)₃-NH₂ (2-[(3-Aminopropyl)methylamino]-ethanol, 1-[(2-Amino-1-methylethyl)amino]-2-propanol, 2-[(2-Amino-2-methylpropyl)amino]-2-methyl-1-propanol, 2-[(4-Amino-3-methylbutyl)amino]-2-methyl-1-propanol, 17-Amino-3,6,9,12,15-pentaazaheptadecan-1-ol und/oder 3,7,12,16-Tetraazaoctadecan-1,18-diol, insbesondere auf der Basis von 2-(2-Aminoethylamino)-ethanol als Alkanolamin.

Die Herstellung dieser Carbamate erfolgt erfindungsgemäß durch Einbringen von festem oder gasförmigem Kohlendioxid in eine Lösung der oder des Alkanolamins in mindestens einem der nachfolgend beschriebenen Lösungsmittel, üblicherweise bei Temperaturen von 0 bis 130°C, bevorzugt 20 bis 100°C. Die Herstellung der Carbamate kann entsprechend den Ausführungen in EP-A 236 895, Seite 6, Zeile 50 bis Seite 7, Zeile 9 erfolgen. Bevorzugt wird das oder die Alkanolamine zur Herstellung der Carbamate mit Kohlendioxid gesättigt.

Als Lösungsmittel werden bei der Herstellung der Carbamate organische Verbindungen mit mindestens einer, bevorzugt 2 bis 8, insbesondere 2 bis 3 Hydroxylgruppen und einem Molekulargewicht von 60 bis 600, bevorzugt 60 bis 300 eingesetzt, beispielsweise übliche Kettenverlängerungs- und/oder Vernetzungsmittel, die für die Polyisocyanat-Polyadditionsreaktion bekannt sind, bevorzugt Ethylenglykol, Diethylenglykol, 1,2- und/oder 1,3-Propandiol, Dipropylenglykol, 1,4-, 1,2- und/oder 1,3-Butandiol, 1,6-Hexandiol, Glycerin, Polyetherpolyole, beispielsweise Polyoxyethylen-, Polyoxypropylen und/oder Polyoxyethylen-polyoxypropylenpolyole, besonders bevorzugt Ethylenglykol und/oder 1,4-Butandiol.

Bevorzugt werden Lösungen von Alkanolamin und Lösungsmitteln zur Herstellung der Carbamatlösungen eingesetzt, bei denen das Gewichtsverhältnis von Lösungsmittel zu Alkanolamin 0,05:1 bis 10:0,5, bevorzugt 0,4:1 bis 2:1, besonders bevorzugt 0,6:1 bis 1,2:1 beträgt.

Die derart hergestellten Carbamate(lösungen) weisen bevorzugt eine Viskosität bei 25°C von kleiner 2000 mPas, bevorzugt kleiner 1500 mPas auf und werden erfindungsgemäß als Treibmittel zur Herstellung von Schaumstoffen, bevorzugt Weichschaumstoffen, besonders bevorzugt weichen oder halbharten Integralschaumstoffen, d.h. Schaumstoffen, die über eine kompakte Haut und einen zelligen, geschäumten Kern verfügen, jeweils auf der Basis von Polyisocyanat-Polyadditionsprodukten, üblicherweise Polyurethane und/oder Polyisocyanurate, bevorzugt Polyurethane, eingesetzt, wobei man die Polyisocyanat-Polyadditionsprodukte üblicherweise durch Umsetzung von (a) Isocyanaten mit. (b) gegenüber Isocyanaten reaktiven Verbindungen in Gegenwart von (c) Treibmitteln, enthaltend erfindungsgemäß die erfindungsgemäßen Carbamate, und gegebenenfalls (d) Katalysatoren und/oder (e) Hilfs- und/oder Zusatzstoffen herstellt.

Die erfindungsgemäß hergestellten Carbamate können bevorzugt direkt in Lösung mit den erfindungsgemäßen Lösungsmitteln als Treibmittel zur Herstellung der Schaumstoffe eingesetzt werden.

Die Schaumstoffe auf der Basis von Polyisocyanat-Polyadditionsprodukten eignen sich insbesondere beispielsweise im Automobilbau, z.B. als Lenkräder, Spoiler oder Armaturentafeln, oder als Schuhsohlen oder Schuheinbauteile.

Diese erfindungsgemäß hergestellten Polyisocyanat-Polyadditionsprodukte, insbesondere die Lenkräder, Spoiler, Armaturentafeln, Schuhsohlen oder Schuheinbauteile weisen folgende Vorteile auf:
- Durch den hohen Gehalt an Kohlendioxid in den Carbamaten wird die Herstellung von Schaumstoffen geringerer Dichte möglich, ohne die Nachteile weiterer physikalischer Treibmittel in Kauf nehmen zu müssen.
- Aufgrund ihrer geringen Viskosität der erfindungsgemäßen Carbamate kann eine deutlich höhere Kohlendioxid-Beladung der Alkanolamine erfolgen, als dies bislang möglich war.
- Durch geeignete Wahl des Lösungsmittels kann die Geschwindigkeit der Kohlendioxidfreisetzung aus dem Carbamat während der Polyisocyanat-Polyadditionsreaktion gesteuert werden.
- Die Carbamate wirken als Katalysator bei der Umsetzung der Isocyanate mit den gegenüber Isocyanaten reaktiven Verbindungen. Die Zugabe von weiteren Katalysatoren kann deshalb eingeschränkt werden. Das "Fogging", d.h. die unerwünschte Abgabe von flüchtigen Substanzen aus dem Schaumstoff, und ein unangenehmer Geruch können damit vermindert werden.
- Insbesondere in Bezug auf Integralschaumstoffe werden die mechanischen Eigenschaften dieser Stoffe deutlich verbessert. Die kompakte Außenhaut weist nur geringe oder keine Poren auf. Des weiteren sind der Abrieb und die Zugfestigkeit insbesondere der Außenhaut verbessert. Narben- und Porenbildung auf der Außenhaut durch mechanische Belastung konnten deutlich vermindert werden.

Als Isocyanate (a) werden bevorzugt (cyclo)aliphatische und/oder insbesondere aromatische Polyisocyanate, bevorzugt Diisocyanate, eingesetzt. Zur Herstellung der erfindungsgemäßen Polyisocyanat-Polyadditionsprodukte eignen sich besonders aromatische Diisocyanate, vorzugsweise Diphenylmethandiisocyanat (MDI) und Toluylendiisocyanat (TDI). Die Isocyanate können in Form der reinen Verbindung oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, und/oder Carbodiimid-modifizierten Isocyanaten, eingesetzt werden.

Als (b) gegenüber Isocyanaten reaktive Verbindungen können beispielsweise Verbindungen mit mindestens zwei mit Isocyanat reaktiven Wasserstoffatomen Verwendung finden, beispielsweise Polycarbonatdiole, Polyetherpolyalkohole, und/oder Polyesterpolyalkohole, im Folgenden auch als Polyole bezeichnet. Bevorzugt sind Polyole mit einer Funktionalität von 2 bis 8, insbesondere 2 bis 6, und einem Molekulargewicht von 500 bis 10000, insbesondere 1000 bis 6000, eingesetzt. Polyetherole sind auf Grund ihrer höheren Hydrolysestabilität besonders bevorzugt. Die Polyetherole werden zumeist durch basisch katalysierte Anlagerung von niederen Alkylenoxiden, insbesondere Ethylenoxid und/oder Propylenoxid, an 2 bis 8-funktionelle, insbesondere 2- bis 6-funktionelle Startsubstanzen, hergestellt.

Zu den gegenüber Isocyanaten reaktiven Verbindungen (b) können auch Kettenverlängerungs- und/oder Vernetzungsmittel gehören. Bei den Kettenverlängerungsmitteln handelt es sich überwiegend um 2- oder dreifunktionelle Alkohole mit Molekulargewichten von 60 bis 499, beispielsweise Ethylenglykol, Propylenglykol, Butandiol-1,4, Pentandiol-1,5. Bei den Vernetzungsmitteln handelt es sich um Verbindungen mit Molekulargewichten von 60 bis 499 und üblicherweise 3 bis 6 aktiven H-Atomen, vorzugsweise Aminen und besonders bevorzugt Alkoholen, beispielsweise Glyzerin, Trimethylolpropan und/oder Pentaerythrit. Die erfindungsgemäßen Produkte können sowohl in Anwesenheit als auch in Abwesenheit von Kettenverlängerungs- und/oder Vernetzungsmitteln hergestellt werden.

Als (c) Treibmittel kann gegebenenfalls zusätzlich zu den erfindungsgemäßen Carbamaten bei der Herstellung der Schaumstoffe Wasser und/oder andere chemisch und/oder physikalisch wirkende Treibmittel eingesetzt werden. Beispiele für physikalische Treibmittel sind (cyclo)aliphatische Kohlenwasserstoffe, vorzugsweise solche mit 4 bis 8, besonders bevorzugt 4 bis 6 und insbesondere 5 Kohlenstoffatomen, beispielsweise Cyclopentan, n-Pentan und/oder Isopentan, teilhalogenierte Kohlenwasserstoffe oder Ether, Ketone oder Acetate. Bevorzugt sind Mischungen enthaltend Wasser und mindestens ein physikalisch wirkendes Treibmittel. Die Menge der eingesetzten Treibmittel richtet sich nach der angestrebten Dichte der Schaumstoffe. Bevorzugt beträgt der Gewichtsanteil der erfindungsgemäßen Carbamate an dem Gesamtgewicht der Treibmittel 1 bis 100 %, besonders bevorzugt 50 bis 100 %, insbesondere 100 %.

Die Herstellung der Produkte erfolgt zumeist in Anwesenheit von üblichen (d) Katalysatoren, beispielsweise tertiären Aminen oder organischen Metallverbindungen, insbesondere Zinnverbindungen.

Die Umsetzung erfolgt gegebenenfalls in Anwesenheit von (e) Hilfs- und/oder Zusatzstoffen, wie Füllstoffen, Zellreglern, oberflächenaktiven Verbindungen, Stabilisatoren, inneren Trennmitteln, Antioxidantien, UV-Schutzmitteln und/oder Farbstoffen.

Zur Herstellung der erfindungsgemäßen Polyisocyanat-Polyadditionsprodukte werden die Isocyanate und die gegenüber Isocyanaten reaktiven Verbindungen bevorzugt in solchen Mengen zur Umsetzung gebracht, daß das Äquivalenzverhältnis von NCO-Gruppen der Isocyanate zur Summe der reaktiven Wasserstoffatome der gegenüber Isocyanaten reaktiven Verbindungen 0,85 bis 1,25 : 1, vorzugsweise 0,95 bis 1,15 : 1 und insbesondere 1 bis 1,05 : 1, beträgt. Falls insbesondere die Polyurethane zumindest teilweise Isocyanuratgruppen gebunden enthalten sollen, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden vorteilhafter weise nach dem one-shot-Verfahren oder nach dem Prepolymerverfahren, beispielsweise mit Hilfe der Hochdruck- oder Niederdruck-Technik üblicherweise in offenen oder geschlossenen, bevorzugt temperierbaren Formwerkzeugen, beispielsweise metallischen Formwerkzeugen hergestellt.

Als besonders vorteilhaft hat es sich erwiesen, nach dem Zweikomponentenverfahren zu arbeiten und für die jeweilige Reaktionsmischung die gegenüber Isocyanaten reaktiven Verbindungen und gegebenenfalls das oder die Treibmittel, die Katalysatoren und/oder Hilfs- und/oder Zusatzstoffe in der Komponente (A) zu vereinigen und als Komponente (B) die Isocyanate oder Mischungen aus den Isocyanaten und gegebenenfalls Treibmittel zu verwenden.

Die Ausgangskomponenten der jeweiligen Reaktionsmischung werden üblicherweise in Abhängigkeit vom Anwendungsfall bei einer Temperatur von 0 bis 100°C, vorzugsweise von 15 bis 60°C, gemischt und beispielsweise in das offene oder gegebenenfalls unter erhöhtem Druck in das geschlossene Formwerkzeug eingebracht. Die Temperatur des Formwerkzeugs bzw. falls keine Form verwendet wird, die Temperatur, bei der die Umsetzung erfolgt, beträgt üblicherweise >30 °C, bevorzugt 35 bis 110 °C.

Gegebenenfalls kann die Umsetzung in direktem Kontakt mit, beispielsweise auf einer Folie und/oder in Gegenwart eines Gewebes, beispielsweise in einer Form, in die vor dem Befüllen mit den Reaktionsmischungen eine Folie oder ein Gewebe plaziert wurde, erfolgen.

Die Erfindung wird in den nachfolgenden Ausführungsbeispielen näher erläutert.

### Beispiele

### Herstellung der Carbamatlösungen:

Die Carbamate wurden hergestellt durch Einleitung von gasförmigem Kohlendioxid in eine Lösung von 2-(2-Aminoethylamino)-ethanol in einem Lösungsmittel (Carbamat 1-6) bzw. ohne Lösungsmittel (Carbamat 7 und 8) bei einer Temperatur von 40-80 °C. Die Kohlendioxidaufnahme wurde kontinuierlich durch die Gewichtszunahme der Lösung verfolgt und nach Erreichen der in Tabelle 1 angegebenen Molverhältnisse von Alkanolamin zu Kohlendioxid beendet.

**Tabelle 1**

| | Kohlendioxidgehalt (mole CO₂ pro mol Alkanolamin) | Viskosität bei 25°C [mPas] | Gewichtsver-hältnis Carbamat zu Lösungsmittel |
|---|---|---|---|
| Carbamat 1 | 0,57 | 680 | 1:1 (Ethylenglykol) |
| Carbamat 2 | 0,75 | 1030 | 1:1 (Ethylenglykol) |
| Carbamat 3 | 0,85 | 1330 | 1:1 (Ethylenglykol) |
| Carbamat 4 | 0,85 | 4000 | 5,76:4,24 (Ethylenglykol) |
| Carbamat 5 | 0,75 | 7500 | 5,68:4,32 (1,4-Butandiol) |
| Carbamat 6 | 0,75 | 3450 | 1:1 (1,4-Butandiol) |
| Carbamat 7 (Vergleich) | 0,57 | Bei 40°C >100000 | Kein Lösungsmittel |
| Carbamat 8 (Vergleich) | 0,68 | Nicht bestimmbar | Kein Lösungsmittel |

Erfindungsgemäß konnte eine Aufnahme von Kohlendioxid bis zu einem Gehalt von 0,85 molen Kohlendioxid pro mol Alkanolamin erreicht werden, während bei der Herstellung des Carbamates in Abwesenheit von Lösungsmitteln bereits bei einem Gehalt von 0,57 eine hochviskose Flüssigkeit vorlag. Eine Aufnahme von Kohlendioxid bis zu einem Molverhältnis von z.B. 1:0,85 war in Abwesenheit von Lösungsmitteln aufgrund des starken Viskositätsanstiegs auch bei einer höheren Temperatur nicht möglich.

### Herstellung von Polyurethanweichschaumstoffen

Die in der Tabelle 1 dargestellten Reaktionssysteme wurden bei einer Materialtemperatur von 40 °C und -einer Kennzahl von 105 in einem Becher mit einem Volumen von 690 ml umgesetzt. Man setzte 350 g (Beispiel 1 u. 2) bzw. 250 g (Beispiel 3 u. 4) des jeweiligen Reaktionssystems ein.

**Tabelle 2**

| | Beispiel 1 | Beispiel 2 | Beispiel 3 | Beispiel 4 |
|---|---|---|---|---|
| Polyol 1 [Gew.-Teile] | 87,8 | 87,8 | 60,9 | 58,8 |
| Polyol 2 [Gew.-Teile] | - | - | 30 | 30 |
| 1,4-Butandiol [Gew.-Teile] | - | - | - | 3,2 |
| Ethylenglykol [Gew.-Teile] | 4,2 | 4,2 | 1,1 | - |
| Katalysator 1 [Gew.-Teile] | 0,9 | 0,9 | 1 | 1 |
| Katalysator 2 [Gew.-Teile] | 0,2 | 0,2 | - | - |
| Carbamat 1 [Gew.-Teile] | 5,4 | - | - | - |
| Carbamat 2 [Gew.-Teile] | - | - | 7 | - |
| Carbamat 3 [Gew.-Teile] | - | 5,4 | - | - |
| Carbamat 6 [Gew.-Teile] | - | - | - | 7 |
| Schwarzpaste [Gew.-Teile] | 1,5 | 1,5 | - | - |
| Polyisocyanat [Gew.-Teile] | 52,1 | 51,6 | 45 | 45 |
| Startzeit | 8-10 s | 7-8 s | 15 s | 15 s |
| Steigzeit | 50-54 s | 48-50 s | 55 s | 53 s |
| Dichte (freigeschäumt) | 320-330 kg/m³ | 270-280 kg/m³ | 265-275 kg/m³ | 215-225 kg/m³ |

Mit den erfindungsgemäßen Carbamaten ist auch ohne Zugabe weiterer Treibmittel die Herstellung von Schaumstoffen geringer Dichte möglich.

### Herstellung von weichen Integralschaumstoffen

Mit den in der Tabelle 2 dargestellten Reaktionssysteme wurden sowohl Lenkräder als auch Prüfplatten der Abmessung 200 x 200 x 40 mm in üblichen Form (Stahlform für die Prüfplatten) hergestellt. Das Befüllen der Formen erfolgte mit einem üblichen Hochdruck-Mischaggregat. Die Temperatur der Ausgangskomponenten betrug dabei 30 bis 40 °C, die Werkzeugtemperatur 40 °C. Die Menge des Reaktionssystems, das in die Lenkradform gegeben wurde, wurde so bemessen, daß die Rohdichte des Lenkrades jeweils 450 kg/m³ betrug. Die Innenwände der Formen wurden vor dem Befüllen mit den Reaktionssystemen mit einem üblichen Formtrennmittel versehen. Die Lenkräder konnten nach 3 min aus der Form entnommen werden, die Prüfplatten nach 6 min (Beispiel 5) bzw. 4 min (Beispiel 6).

**Tabelle 3**

| | Beispiel 5 | Beispiel 6 |
|---|---|---|
| Polyol 1 | 57 Gew.-Teile | 55,2 Gew.-Teile |
| Polyol 2 | 30 Gew.-Teile | 30 Gew.-Teile |
| Ethylenglykol | 6,5 Gew.-Teile | 4,6 Gew.-Teile |
| Katalysator 1 | 0,8 Gew.-Teile | 0,6 Gew.-Teile |
| Katalysator 2 | 0,2 Gew.-Teile | 0,2 Gew.-Teile |
| Wasser | 0,5 Gew.-Teile | - |
| Carbamat 2 | ₋ | 4,4 Gew.-Teile |
| Schwarzpaste | 5 Gew.-Teile | 5 Gew.-Teile |
| Polyisocyanat | 49 Gew.-Teile | 49 Gew.-Teile |
| | | |

| Lenkräder: | | |
|---|---|---|
| Poren in der Außenhaut | Poren deutlich sichtbar | Keine Poren sichtbar |
| Narbenbildung nach Abriebprüfung (DIN 53339) | Deutliche Abriebverluste und Narbenbildung | Kaum Abriebverluste oder Narbenbildung feststellbar |
| | | |

| Prüfplatten: | | |
|---|---|---|
| Dichte [kg/m³] | 449 | 451 |
| Prüfung der Haut: | | |
| Dichte [kg/m³] | 610 | 667 |
| Zugfestigkeit [kPa] | 4183 | 5332 |
| | | |
| Weiterreißfestigkeit [N/mm] | 8,6 | 8,6 |

In weiteren Experimenten wurden Prüfplatten mit den Reaktionssystemen der Beispiele 5 und 6 hergestellt, die eine Dichte von 449 bzw. 451 kg/m³ und eine Shore-Härte A von 59 bzw. 60 aufwiesen.
Polyol 1: Polyethertriol mit einer Hydroxylzahl von 28 mg KOH/g, hergestellt durch Pfropfoxylierung von Glycerin und anschließender Ethoxylierung (Propylenoxid: Ethylenoxid Gewichtsverhältnis 86:14)
Polyol 2: Polyetherdiol mit einer Hydroxylzahl von 29 mg KOH/g, hergestellt durch Pfropfoxylierung von Propylenglykol und anschließender Ethoxylierung (Propylenoxid: Ethylenoxid Gewichtsverhältnis 81:19)
Katalysator 1 und Katalysator 2: Polyurethankatalysatoren aus der Verbidungsklasse der tertiären Amine
Polyisocyanat: Mischung, bestehend aus 75 Gew.-Teilen einer Carbodiimidgruppen enthaltenen Polyisocyanatmischung mit einem NCO-Gehalt von 29,5 Gew.-%, hergestellt durch partielle Carbodiimidisierung von 4,4'-Diphenylmethandiisocyanat und
   25 Gew.-Teilen eines Prepolymeren, welches hergestellt wurde aus 87,01 Gew.-Teilen 4,4'-Diphenylmethandiisocyanat und 8,14 Gew.-Teilen Dipropylenglykol und 4,85 Gew.-Teilen eines Polyoxypropylenpolyols mit einer Hydroxylzahl von 250 mgKOH/g, welches mit 1,2-Propylenglykol gestartet wurde, mit einem NCO-Gehalt von 23 Gew.-%. Das Polyisocyanat hatte einen Gesamt-NCO-Gehalt von 27,8 Gew.-%.

Die Ausführungen zu den Ausgangskomponenten gelten für Tabelle 2 und 3.

Die erfindungsgemäß hergestellten Schaumstoffe wiesen somit die bereits dargestellten Vorteile auf, insbesondere eine verbesserte Zugfestigkeit und einen verbesserten Abrieb der Haut, eine geringere Porenbildung, einen verminderten Katalysatorbedarf bei gleichzeitig verringerter Formstandzeit und einen exzellenten visuellen Eindruck.

## Patentansprüche

1. Carbamatlösungen erhältlich durch Umsetzung mindestens eines Alkanolamins mit Kohlendioxid in mindestens einer organischen Verbindung als Lösungsmittel, das ein Molekulargewicht von 60 bis 600 besitzt und mindestens eine Hydroxylgruppe enthält, wobei das Carbamat mindestens 0,51 mole gebundenes Kohlendioxid pro mol Alkanolamin enthält und das Alkanolamin eine der folgenden Formeln aufweist:
(I): NH₂-X-OH
(II): HO-X-Y-OH
(III) : HO-X-NR⁹-(CR⁷R⁸)ₙ₅-Y-OH
mit
X: - [(CR¹R²)ₙ₁-NR³]ₙ₂-[(CR⁴R⁵)ₙ₃-NR⁶]ₙ₄-(CR⁷R⁸)ₙ₅-
Y: -[NR⁶-(CR⁴R⁵)ₙ₃]ₙ₄-[NR³-(CR¹R²)ₙ₁]ₙ₂-
und
n1, n3, n5: gleiche oder verschiedene, ganze Zahlen ausgewählt aus der Gruppe 1, 2, 3, 4,
n2, n4: gleiche oder verschiedene, ganze Zahlen ausgewählt aus der Gruppe 0, 1, 2, 3, 4, 5, 6, wobei jeweils für X und Y die Summe aus n2 und n4 größer oder gleich 1 ist,
R1, R2, R4, R5, R7, R8: gleiche oder verschiedene Reste ausgewählt aus der Gruppe Wasserstoff, aliphatische, cycloaliphatische, araliphatische und aromatische Reste mit 1 bis 20 Kohlenstoffatomen,
R3, R6, R9: gleiche oder verschiedene Reste ausgewählt aus der Gruppe Wasserstoff, aliphatische, cycloaliphatische, araliphatische und aromatische Reste mit 1 bis 20 Kohlenstoffatomen.

2. Carbamat nach Anspruch 1 auf der Basis von 2-(2-Aminoethylamino)-ethanol als Alkanolamin.

3. Verfahren zur Herstellung von Schaumstoffen auf der Basis von Polyisocyanat-Polyadditionsprodukten, **dadurch gekennzeichnet, daß** man als Treibmittel Carbamatlösungen gemäß Anspruch 1 verwendet.

4. Verfahren zur Herstellung von Weichschaumstoffen auf der Basis von Polyisocyanat-Polyadditionsprodukten, **dadurch gekennzeichnet, daß** man als Treibmittel Carbamatlösungen gemäß Anspruch 1 verwendet.

5. Verfahren zur Herstellung von weichen oder halbharten Integralschaumstoffen auf der Basis von Polyisocyanat-Polyadditionsprodukten, **dadurch gekennzeichnet, daß** man als Treibmittel Carbamatlösungen gemäß Anspruch 1 verwendet.

6. Verfahren nach einem der Ansprüche 3 bis 5, **dadurch gekennzeichnet, daß** man die Polyisocyanat-Polyadditionsprodukte durch Umsetzung von (a) Isocyanaten mit (b) gegenüber Isocyanaten reaktiven Verbindungen in Gegenwart von (c) Treibmitteln und gegebenenfalls (d) Katalysatoren und/oder (e) Hilfs- und/oder Zusatzstoffen herstellt.

7. Verfahren nach einem der Ansprüche 3 bis 5 zur Herstellung von Lenkrädern, Spoilern, Armaturentafeln, Schuhsohlen oder Schuheinbauteilen.

8. Lenkräder, Spoiler, Armaturentafeln, Schuhsohlen oder Schuheinbauteile erhältlich durch ein Verfahren gemäß Anspruch 7.

## Claims

1. A carbamate solution obtainable by reacting at least one alkanolamine with carbon dioxide in, as solvent, at least one organic compound having a molecular weight of from 60 to 600 and containing at least one hydroxyl group, wherein the carbamate contains at least 0.51 mol of bound carbon dioxide per mole of alkanolamine and the alkanolamine has one of the following formulae:
(I): NH₂-X-OH
(II): HO-X-Y-OH
(III) : HO-X-NR⁹-(CR⁷R⁸)ₙ₅-Y-OH
where
X: -[(CR¹R²)ₙ₁-NR³]ₙ₂-[(CR⁴R⁵)ₙ₃-NR⁶]ₙ₄-(CR⁷R⁸)ₙ₅-
Y: -[NR⁶-(CR⁴R⁵)ₙ₃]ₙ₄-[NR³-(CR¹R²)ₙ₁]ₙ₂-
and
n1, n3, n5: identical or different integers selected from the group consisting of 1, 2, 3, 4,
n2, n4: identical or different integers selected from the group consisting of 0, 1, 2, 3, 4, 5, 6, where for each of X and Y the sum of n2 and n4 is greater than or equal to 1,
R1, R2, R4, R5, R7, R8: identical or different radicals selected from the group consisting of hydrogen, aliphatic, cycloaliphatic, araliphatic and aromatic radicals having from 1 to 20 carbon atoms,
R3, R6, R9: identical or different radicals selected from the group consisting of hydrogen, aliphatic, cycloaliphatic, araliphatic and aromatic radicals having from 1 to 20 carbon atoms.

2. A carbamate as claimed in claim 1 and based on 2-(2-aminoethylamino)ethanol as alkanolamine.

3. A process for producing foams based on polyisocyanate polyaddition products, wherein a carbamate solution as claimed in claim 1 is used as blowing agent.

4. A process for producing flexible foams based on polyisocyanate polyaddition products, wherein a carbamate solution as claimed in claim 1 is used as blowing agent.

5. A process for producing flexible or semirigid integral foams based on polyisocyanate polyaddition products, wherein a carbamate solution as claimed in claim 1 is used as blowing agent.

6. A process as claimed in any of claims 3 to 5, wherein the polyisocyanate polyaddition products are produced by reacting (a) isocyanates with (b) compounds which are reactive toward isocyanates in the presence of (c) blowing agents and, if desired, (d) catalysts and/or (e) auxiliaries and/or additives.

7. A process as claimed in any of claims 3 to 5 for producing steering wheels, spoilers, dashboards, shoe soles or shoe linings.

8. A steering wheel, spoiler, dashboard, shoe sole or shoe lining obtainable by a process as claimed in claim 7.

## Revendications

1. Solutions de carbamate que l'on peut obtenir par réaction d'au moins une alcanolamine avec du dioxyde de carbone dans au moins un composé organique comme solvant, qui présente un poids moléculaire de 60 à 600 et contient au moins un groupe hydroxyle, dans lesquelles le carbamate contient au moins 0,51 mole de dioxyde de carbone fixé par mole d'alcanolamine et l'alcanolamine présente une des formules suivantes :
(I) : NH₂-X-OH
(II) : HO-X-Y-OH
(III) : HO-X-NR⁹-(CR⁷R⁸)ₙ₅-Y-OH
où
X représente -[(CR¹R²)ₙ₁-NR³]ₙ₂-[(CR⁴R⁵)ₙ₃-NR⁶]ₙ₄-(CR⁷R⁸)ₙ₅-
Y représente -[NR⁶-(CR⁴R⁵)ₙ₃]ₙ₄-[NR³-(CR¹R²)ₙ₁]ₙ₂- et
n1, n3, n5 sont des nombres entiers identiques ou différents choisis parmi le groupe de 1, 2, 3, 4,
n2, n4 sont des nombres entiers identiques ou différents choisis parmi le groupe de 0, 1, 2, 3, 4, 5, 6, la somme de n2 et de n4 étant pour X et Y supérieure ou égale à 1,
R¹, R², R⁴, R⁵, R⁷, R⁸ sont des radicaux identiques ou différents choisis parmi le groupe de l'hydrogène et des radicaux aliphatiques, cycloaliphatiques, araliphatiques et aromatiques comportant 1 à 20 atomes de carbone,
R³, R⁶, R⁹ représentent des radicaux identiques ou différents choisis parmi le groupe de l'hydrogène et des radicaux aliphatiques, cycloaliphatiques, araliphatiques et aromatiques comportant 1 à 20 atomes de carbone.

2. Carbamate suivant la revendication 1, à base de 2-(2-aminoéthylamino)-éthanol, comme alcanolamine.

3. Procédé de préparation de mousses à base de produits de polyaddition de polyisocyanate, **caractérisé en ce qu'**on utilise, comme agent gonflant, des solutions de carbamate suivant la revendication 1.

4. Procédé de préparation de mousses souples à base de produits de polyaddition de polyisocyanate, **caractérisé en ce qu'**on utilise, comme agent gonflant, des solutions de carbamate suivant la revendication 1.

5. Procédé de préparation de mousses à peau intégrée souples ou demi-dures à base de produits de polyaddition de polyisocyanate, **caractérisé en ce qu'**on utilise, comme agent gonflant, des solutions de carbamate suivant la revendication 1.

6. Procédé suivant l'une des revendications 3 à 5, **caractérisé en ce qu'**on prépare les produits de polyaddition de polyisocyanate par réaction (a) d'isocyanates avec (b) des composés réactifs vis-à-vis des isocyanates, en présence (c) d'agents gonflants et éventuellement (d) de catalyseurs et/ou (e) d'adjuvants et/ou d'additifs.

7. Procédé suivant l'une des revendications 3 à 5, pour la fabrication de volants de direction, de becquets, de tableaux de bord, de semelles ou d'éléments incorporés de chaussures.

8. Volants de direction, becquets, tableaux de bord, semelles ou éléments incorporés de chaussures, que l'on peut obtenir par un procédé suivant la revendication 7.
